(19) Europäisches Patentamt
European Patent Office
Office européen des brevets

(11) **EP 4 299 614 A1**

(12) **EUROPEAN PATENT APPLICATION**
published in accordance with Art. 153(4) EPC

(43) Date of publication:
**03.01.2024 Bulletin 2024/01**

(21) Application number: **22759287.0**

(22) Date of filing: **31.01.2022**

(51) International Patent Classification (IPC):
*C08F 8/00* (2006.01)     *B29C 45/00* (2006.01)
*C08F 214/26* (2006.01)     *H01B 3/44* (2006.01)
*H01B 7/02* (2006.01)     *H01B 7/18* (2006.01)

(52) Cooperative Patent Classification (CPC):
**B29C 45/00; C08F 8/00; C08F 214/26; H01B 3/44;
H01B 7/02; H01B 7/18**

(86) International application number:
**PCT/JP2022/003665**

(87) International publication number:
**WO 2022/181246 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021   JP 2021031090
26.02.2021   JP 2021031092
30.09.2021   JP 2021162171**

(71) Applicant: **Daikin Industries, Ltd.
Osaka-shi, Osaka 530-0001 (JP)**

(72) Inventors:
• **ISAKA, Tadaharu
Osaka-shi, Osaka 530-0001 (JP)**
• **ZENKE, Yumi
Osaka-shi, Osaka 530-0001 (JP)**
• **YAMAMOTO, Yukari
Osaka-shi, Osaka 530-0001 (JP)**
• **TSUDA, Hayato
Osaka-shi, Osaka 530-0001 (JP)**

(74) Representative: **Hoffmann Eitle
Patent- und Rechtsanwälte PartmbB
Arabellastraße 30
81925 München (DE)**

(54) **COPOLYMER, MOLDED BODY, INJECTION MOLDED BODY, AND COATED ELECTRICAL WIRE**

(57)     There is provided a copolymer containing tetrafluoroethylene unit and perfluoro(propyl vinyl ether) unit, wherein the copolymer has a content of perfluoro(propyl vinyl ether) unit of 4.6 to 5.2% by mass with respect to the whole of the monomer units, a melt flow rate at 372°C of 22.0 to 28.0 g/10 min, and the number of functional groups of 50 or less per $10^6$ main-chain carbon atoms.

**Description**

TECHNICAL FIELD

The present disclosure relates to a copolymer, a formed article, an injection molded article and a coated electric wire.

BACKGROUND ART

In Patent Document 1, a tetrafluoroethylene copolymer is described which is composed of tetrafluoroethylene and perfluoro(alkyl vinyl ether) represented by the following general formula (I) -

$$Rf\text{-}O\text{-}CF=CF_2 \qquad (I)$$

wherein Rf represents a perfluoroalkyl group having 1 to 5 carbon atoms; wherein the number of unstable terminal groups is 10 to 100 per $10^6$ carbon atoms, and among the unstable terminal groups, the number of -COF and/or -COOH is 10 to 100 in total per $10^6$ carbon atoms.

RELATED ART

PATENT DOCUMENT

Patent Document 1: Japanese Patent Laid-Open No. 2005-320497

SUMMARY OF THE INVENTION

PROBLEM TO BE SOLVED BY THE INVENTION

An object of the present disclosure is to provide a copolymer which enables a thin coating layer to be formed on a core wire having a small diameter at a high rate by an extrusion forming method, enables an injection molded article excellent in the surface smoothness to be obtained in a high productivity by an injection molding method, and enables a formed article excellent in the abrasion resistance at 150°C, the carbon dioxide low permeability, the chemical solution low permeability, the creep resistance, the rigidity on heating and the heat distortion resistance after chemical immersion to be obtained.

MEANS FOR SOLVING THE PROBLEM

According to the present disclosure, there is provided a copolymer containing tetrafluoroethylene unit and perfluoro(propyl vinyl ether) unit, wherein the copolymer has a content of perfluoro(propyl vinyl ether) unit of 4.6 to 5.2% by mass with respect to the whole of the monomer units, a melt flow rate at 372°C of 22.0 to 28.0 g/10 min, and the number of functional groups of 50 or less per $10^6$ main-chain carbon atoms.
According to the present disclosure, an injection molded article comprising the above copolymer is further provided.
According to the present disclosure, a coated electric wire having a coating layer comprising the above copolymer is further provided.
According to the present disclosure, there is provided a formed article comprising the above copolymer, wherein the formed article is a microtube, a container, a piping member, or an electric wire coating.

EFFECTS OF INVENTION

According to the present disclosure, there can be provided a copolymer which enables a thin coating layer to be formed on a core wire having a small diameter at a high rate by an extrusion forming method, enables an injection molded article excellent in the surface smoothness to be obtained in a high productivity by an injection molding method, and enables a formed article excellent in the abrasion resistance at 150°C, the carbon dioxide low permeability, the chemical solution low permeability, the creep resistance, the rigidity on heating and the heat distortion resistance after chemical immersion to be obtained.

DESCRIPTION OF EMBODIMENTS

Hereinafter, specific embodiments of the present disclosure will be described in detail, but the present disclosure is not limited to the following embodiments.

A copolymer of the present disclosure contains tetrafluoroethylene (TFE) unit and perfluoro(propyl vinyl ether) (PPVE) unit.

In tests of biology, chemistry and the like, microtubes (microfuges) which can accommodate a small amount of samples are used to store or centrifuge a small amount of samples. When the heat resistance and the chemical resistance are particularly required, microtubes made of fluororesin are utilized.

Usually, microtubes have a cylindrical shape or a conical shape, and one end is opened and another end is closed. A lid is mounted on the opened end. When centrifugation is carried out at a high temperature of 95°C or higher for a long time using such a microtube, the microtube may deform. In addition, when centrifugation is carried out at a high temperature by accommodating a chemical having a high reactivity in such a microtube, abrasion or cracks may be generated in the microtube. On the other hand, in order to produce microtubes in high productivity, it is required to use a material excellent in the moldability. Further, there are cases where a chemical solution is stored in a microtube, so that in order to prevent the change in quality of the chemical solution, it is preferable to use a material having an excellent chemical solution low permeability such that a chemical solution such as an electrolytic solution is hardly released to the outside, and having an excellent carbon dioxide low permeability such that carbon dioxide hardly enters from the outside to the inside.

It has been found that by suitably regulating the content of PPVE unit, the melt flow rate (MFR) and the number of functional groups of the copolymer containing TFE unit and PPVE unit, the formability of the copolymer is significantly improved, and furthermore, the abrasion resistance at 150°C, the carbon dioxide low permeability, the chemical solution low permeability, the creep resistance, the rigidity on heating and the heat distortion resistance after chemical immersion of the formed articles formed of such a copolymer can be improved. Therefore, by using the copolymer of the present disclosure, there can be obtained microtubes which hardly change the quality of the sample and in which deformation or cracks are hardly generated even when centrifugation is carried out at a high temperature in a state of accommodating a chemical having a high reactivity.

Further, the copolymer of the present disclosure can form a thin coating layer on a core wire having a small diameter at a high rate by an extrusion forming method. Thus, the copolymer of the present disclosure can be not only utilized as a material for valves, but also utilized in wide applications such as electric wire coatings.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is, with respect to the whole of the monomer units, 4.6 to 5.2% by mass. The content of the PPVE unit of the copolymer is preferably 4.7% by mass or higher, more preferably 4.8% by mass or higher, still more preferably 4.9% by mass or higher and especially preferably 5.0% by mass or higher, and preferably 5.1% by mass or lower and more preferably 5.0% by mass or lower. When the content of the PPVE unit of the copolymer is too large, there may not be obtained formed articles excellent in the carbon dioxide low permeability, the creep resistance, and the rigidity on heating. When the content of the PPVE unit of the copolymer is too low, there may not be obtained formed articles excellent in the abrasion resistance at 150°C and the heat distortion resistance after chemical immersion.

The content of the TFE unit of the copolymer is, with respect to the whole of the monomer units, preferably 94.8 to 95.4% by mass, more preferably 94.9% by mass or higher, and still more preferably 95.0% by mass or higher, and more preferably 95.3% by mass or lower, still more preferably 95.2% by mass or lower, especially preferably 95.1% by mass or lower, and most preferably 95.0% by mass or lower. When the content of the TFE unit of the copolymer is too low, there may not be obtained formed articles excellent in the carbon dioxide low permeability, the creep resistance and the rigidity on heating. When the content of the TFE unit of the copolymer is too large, there may not be obtained formed articles excellent in the abrasion resistance at 150°C and the heat distortion resistance after chemical immersion.

In the present disclosure, the content of each monomer unit in the copolymer is measured by a $^{19}$F-NMR method.

The copolymer can also contain a monomer unit originated from a monomer copolymerizable with TFE and PPVE. In this case, the content of the monomer unit copolymerizable with TFE and PPVE is, with respect to the whole of the monomer units of the copolymer, preferably 0 to 1.5% by mass, more preferably 0.05 to 0.6% by mass, and still more preferably 0.1 to 0.3% by mass.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, perfluoro(alkyl vinyl ether) [PAVE] (provided that, PPVE is excluded) represented by $CF_2=CF-ORf^1$ wherein $Rf^1$ is a perfluoroalkyl group having 1 to 8 carbon atoms, and alkyl perfluorovinyl ether derivatives represented by $CF_2=CF-OCH_2-Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 22.0 to 28.0 g/10 min. The MFR of the copolymer is preferably 23.0 g/10 min or higher, and more preferably 23.1 g/10 min or higher, and preferably 27.0 g/10 min or lower. When the MFR of the copolymer is too high, there may not be obtained formed articles excellent in the heat distortion resistance after chemical immersion. When the MFR of the copolymer is too low, it may be difficult to obtain injection molded articles excellent in the surface smoothness in the case of injecting the copolymer by an injection molding method, and a coating breakage may occur or a defect may occur on the coating layer in the case of extruding the copolymer by an extrusion forming method on a core wire having a small diameter. When the MFR of the copolymer is too low, there cannot be obtained formed articles excellent in the carbon dioxide low permeability and the chemical solution low permeability.

In the present disclosure, the MFR is a value obtained as a mass (g/10 min) of the polymer flowing out from a nozzle of 2.1 mm in inner diameter and 8 mm in length per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

The number of functional groups per $10^6$ main-chain carbon atoms of the copolymer is 50 or less. The number of functional groups per $10^6$ main-chain carbon atoms of the copolymer is preferably 40 or less, more preferably 30 or less, still more preferably 20 or less, further still more preferably 15 or less, especially preferably 10 or less and most preferably less than 6. Due to that the number of functional groups of the copolymer is in the above range, injection molded articles excellent in the surface smoothness can be obtained in a high productivity by an injection molding method, and a thin coating layer can be formed on a core wire having a small diameter at a high rate by an extrusion forming method, and formed articles excellent in the abrasion resistance at 150°C, the carbon dioxide low permeability, the chemical solution low permeability, the creep resistance, the rigidity on heating and the heat distortion resistance after chemical immersion can be obtained. When the number of functional groups of the copolymer is too large, it may be difficult to obtain formed articles that are excellent in the carbon dioxide low permeability and the creep resistance and exhibit excellent low permeability to a chemical solution such as an electrolytic solution.

For identification of the kind of the functional groups and measurement of the number of the functional groups, infrared spectroscopy can be used.

The number of the functional groups is measured, specifically, by the following method. First, the copolymer is molded by cold press to prepare a film of 0.25 to 0.30 mm in thickness. The film is analyzed by Fourier transform infrared spectroscopy to obtain an infrared absorption spectrum of the copolymer, and a difference spectrum against a base spectrum that is completely fluorinated and has no functional groups is obtained. From an absorption peak of a specific functional group observed on this difference spectrum, the number N of the functional group per $1\times10^6$ carbon atoms in the copolymer is calculated according to the following formula (A).

$$N = I \times K/t \quad (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Table 1 | | | | |
|---|---|---|---|---|
| Functional Group | Absorption Frequency $(cm^{-1})$ | Molar Extinction Coefficient (l/cm/mol) | Correction Factor | Model Compound |
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Absorption frequencies of -CH$_2$CF$_2$H, -CH$_2$COF, -CH$_2$COOH, - CH$_2$COOCH$_3$ and -CH$_2$CONH$_2$ are lower by a few tens of kaysers $(cm^{-1})$ than those of -CF$_2$H, -COF, -COOH free and -COOH bonded, - COOCH$_3$ and -CONH$_2$ shown in the Table, respectively.

For example, the number of the functional group -COF is the total of the number of a functional group determined from an absorption peak having an absorption frequency of 1,883 $cm^{-1}$ derived from -CF$_2$COF and the number of a functional group determined from an absorption peak having an absorption frequency of 1,840 $cm^{-1}$ derived from -CH$_2$COF.

The functional groups are ones present on main chain terminals or side chain terminals of the copolymer, and ones present in the main chain or the side chains. The number of the functional groups may be the total of numbers of -CF=CF$_2$, - CF$_2$H, -COF, -COOH, -COOCH$_3$, -CONH$_2$ and -CH$_2$OH.

The functional groups are introduced to the copolymer by, for example, a chain transfer agent or a polymerization initiator used for production of the copolymer. For example, in the case of using an alcohol as the chain transfer agent, or a peroxide having a structure of -CH$_2$OH as the polymerization initiator, -CH$_2$OH is introduced on the main chain terminals of the copolymer. Alternatively, the functional group is introduced on the side chain terminal of the copolymer by polymerizing a monomer having the functional group.

By subjecting the copolymer having such a functional group to a fluorination treatment, the copolymer satisfying the above range regarding the number of functional groups can be obtained. That is, the copolymer of the present disclosure is preferably one which is subjected to the fluorination treatment. Further, the copolymer of the present disclosure preferably has -CF$_3$ terminal groups.

The melting point of the copolymer is preferably 295 to 315°C, more preferably 300°C or higher, still more preferably 302°C or higher, and preferably 308°C or lower, and more preferably 304°C or lower. Due to that the melting point is in the above range, there can be obtained the copolymer giving formed articles particularly better in the mechanical property at high temperatures and the sealability at high temperatures.

In the present disclosure, the melting point can be measured by using a differential scanning calorimeter [DSC].

The carbon dioxide permeation coefficient of the copolymer is preferably 1,500 $cm^3 \cdot mm/(m^2 \cdot 24h \cdot atm)$ or lower. Due to that the content of the PPVE unit, the melt flow rate (MFR) and the number of functional groups of the copolymer containing the TFE unit and the PPVE unit are suitably regulated, the copolymer of the present disclosure has an excellent carbon dioxide low permeability. Therefore, since microtubes, piping members, and containers that can suppress the permeation of carbon dioxide from the outside can be formed by using the copolymer of the present disclosure, it hardly causes such a problem that, when an alkaline aqueous solution such as an aqueous sodium hydroxide solution is stored in a microtube for a long time or is allowed to remain in piping for a long time, alkali in the aqueous solution and carbon dioxide permeated from the outside react with each other to reduce the purity of the alkaline aqueous solution.

In the present disclosure, the carbon dioxide permeation coefficient can be measured under the condition of a test temperature of 70°C and a test humidity of 0% RH. Specific measurement of the carbon dioxide permeation coefficient can be carried out by a method described in Examples.

The electrolytic solution permeability of the copolymer is preferably 7.0 $g \cdot cm/m^2$ or lower and more preferably 6.5 $g \cdot cm/m^2$ or lower. Due to that the content of the PPVE unit, the melt flow rate (MFR) and the number of functional groups of the copolymer containing the TFE unit and the PPVE unit are suitably regulated, the copolymer of the present disclosure has an excellent electrolytic solution low permeability. That is, by using the copolymer of the present disclosure, formed articles that hardly allow a chemical solution such as an electrolytic solution to permeate can be obtained.

In the present disclosure, the electrolytic solution permeability can be measured under the condition of a temperature of 60°C and for 30 days. Specific measurement of the electrolytic solution permeability can be carried out by a method described in Examples.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalaknes such as $CF_2ClCFClCF_2CF_3$ and $CF_3CFClCFClCF_3$; hydrofluroalkanes such as $CF_3CFHCFHCF_2CF_2CF_3$, $CF_2HCF_2CF_2CF_2CF_2H$ and $CF_3CF_2CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of the suspensibility and the economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, cleaning and drying the copolymer contained in the aqueous dispersion. Then in the case of obtaining the copolymer as a slurry by the polymerization reaction, the copolymer can be recovered by taking out the slurry from a reaction container, and cleaning and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$ and -CONH$_2$, and thermally relatively stable functional groups thereof, such as -CF$_2$H, can be converted to thermally very stable -CF$_3$. Consequently, the total number (number of functional groups) of -COOH, -COOCH$_3$, -CH$_2$OH, -COF, -CF=CF$_2$, - CONH$_2$ and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer, and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, but use as a forming material is suitable. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding and rotolining molding. As the forming method, among these, preferable are extrusion forming, compression molding, injection molding and transfer molding; from the viewpoint of being able to produce formed articles in a high productivity, more preferable are injection molding, extrusion forming and transfer molding, and still more preferable is injection molding. That is, it is preferable that formed articles are extrusion formed articles, compression molded articles, injection molded articles or transfer molded articles; and from the viewpoint of being able to produce formed articles in a high productivity, being injection molded articles, extrusion formed articles or transfer molded articles is more preferable, and being injection molded articles is still more preferable. By forming the copolymer of the present disclosure by an injection molding method, injection molded articles excellent in the surface smoothness can be obtained in high productivity.

The formed articles containing the copolymer of the present disclosure may be, for example, nuts, bolts, joints, films, bottles, gaskets, electric wire coatings, tubes, hoses, pipes, valves, sheets, seals, packings, tanks, rollers, containers, cocks, connectors, filter housings, filter cages, flowmeters, pumps, wafer carrier, or wafer boxes.

The copolymer of the present disclosure, the above composition and the above formed articles can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes;

inner surface lining materials of chemical solution tanks and piping of chemical plants and semiconductor factories;

members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical solution transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances; members for waste liquid transport, such as tubes and hoses for waste liquid transport;

members for high-temperature liquid transport, such as tubes and hoses for high-temperature liquid transport;

members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resistant to sour gasoline, resistant to alcohol fuels, and resistant to methyl tertiary butyl ether and resistant to amines and the like.

The above chemical stoppers and packaging films for chemicals have excellent chemical resistance to acids and the like. The above chemical solution transfer members also include corrosionproof tapes wound on chemical plant pipes.

The above formed articles also include vehicular radiator tanks, chemical solution tanks, bellows, spacers, rollers and gasoline tanks, waste liquid transport containers, high-temperature liquid transport containers and fishery and fish farming tanks.

The above formed articles further include members used for vehicular bumpers, door trims and instrument panels, food processing apparatuses, cooking devices, water- and oilrepellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure are excellent in the abrasion resistance at 150°C, the carbon dioxide low permeability, the chemical solution low permeability, the creep resistance, the rigidity on heating and the heat distortion resistance after chemical immersion, the formed articles can suitably be utilized for nuts, bolts, joints, packings, valves, cocks, connectors, filter housings, filter cages, flowmeters, pumps, and the like. For example, the formed articles can suitably be utilized as piping members (in particular, joints) to be used in the transfer of chemical solutions and flowmeter housings provided with flow paths for chemical solutions in flowmeters. The piping members and flowmeter housings of the present disclosure are excellent in the abrasion resistance at 150°C, the carbon dioxide low permeability, the chemical solution low permeability, the creep resistance, the rigidity on heating and the heat distortion resistance after chemical immersion. Hence, the piping members and flowmeter housings of the present disclosure can be suitably used in the measurement of the flow rate of the chemical solution at a high temperature and are hardly damaged even when chemical agents are allowed to flow.

Due to that the formed articles containing the copolymer of the present disclosure are excellent in the abrasion resistance at 150°C, the carbon dioxide low permeability, the chemical solution low permeability, the creep resistance, the rigidity on heating and the heat distortion resistance after chemical immersion, the formed articles can suitably be utilized as members to be compressed such as gaskets and packings.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. The members to be compressed of the present disclosure, due to being excellent in the electrolytic solution low permeability, are especially suitable as members used in a state of contacting with a non-aqueous electrolyte in the non-aqueous electrolyte batteries. That is, the members to be compressed of the present disclosure may also be ones having a liquid-contact surface with a non-aqueous electrolyte in the non-aqueous electrolyte batteries.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used including, but are not limited to, propylene carbonate, ethylene carbonate, butylene carbonate, γ-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, but may be $LiClO_4$, $LiAsF_6$, $LiPF_6$, $LiBF_4$, $LiCl$, $LiBr$, $CH_3SO_3Li$, $CF_3SO_3Li$, cesium carbonate and the like.

The members to be compressed of the present disclosure can suitably be utilized, for example, as sealing members such as sealing gaskets and sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

The members to be compressed of the present disclosure, due to being excellent in the creep resistance and the heat distortion resistance after chemical immersion, can suitably be used under an environment of becoming high temperatures. It is suitable for the members to be compressed of the present disclosure to be used, for example, in an environment where the maximum temperature becomes 40°C or higher. It is suitable for the members to be compressed of the present disclosure to be used, for example, in an environment where the maximum temperature becomes 95°C or higher. Examples of the case where the temperature of the members to be compressed of the present disclosure may become such high temperatures include the case where after a member to be compressed is installed in a state of being compressed to a battery, other battery members are installed to the battery by welding, and the case where a non-aqueous electrolyte battery generates heat.

The members to be compressed of the present disclosure, due to being excellent in the creep resistance and the heat distortion resistance after chemical immersion, can suitably be used as sealing members for non-aqueous electrolyte batteries or insulating members for non-aqueous electrolyte batteries. For example, in the charge time of batteries such as non-aqueous electrolyte secondary batteries, the temperature of the batteries temporarily becomes 40°C or higher, specially temporarily becomes 95°C or higher in some cases. Even when the members to be compressed of the present disclosure are used by being deformed at high temperatures and at a high compression deformation rate, and moreover are brought into contact with non-aqueous electrolytes at high temperatures, in batteries such as non-aqueous electrolyte secondary batteries, a high rebound resilience is not impaired. Therefore, the members to be compressed of the present disclosure, in the case of being used as sealing members, have the excellent sealing property and also at high temperatures, retain the sealing property for a long term. Further, the members to be compressed of the present disclosure, due to containing the above copolymer, have the excellent insulating property. Therefore, in the case of using the members to be compressed of the present disclosure as insulating members, the members to be compressed firmly adhere to two or more electrically conductive members and prevent short circuit over a long term.

Due to that the formation of the copolymer of the present disclosure by an extrusion forming method enables a thin coating layer to be formed on a core wire having a small diameter, at a high take-over speed without causing the coating breakage, even when the diameter of the core wire is small and enables to form a coating layer excellent in the electric property, the copolymer of the present disclosure can be suitably utilized as a material for forming electric wire coatings. Therefore, the coated electric wire having a coating layer containing the copolymer of the present disclosure has almost no defects which may generate sparks, even when the diameter of the core wire is small and the coating layer is thin, and is also excellent in the electric property.

The coated electric wire has a core wire, and the coating layer installed on the periphery of the core wire and containing the copolymer of the present disclosure. For example, an extrusion formed article made by melt extruding the copolymer in the present disclosure on a core wire can be made into the coating layer. The coated electric wire is suitable for LAN cables (Eathernet Cables), high-frequency transmission cables, flat cables, heat resistant cables, and the like, and among them, it is suitable for transmission cables such as LAN cables (Eathernet Cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferably 2 mm or smaller.

With regard to specific examples of the core wire, there may be used, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter).

The coating layer is preferably one having a thickness of 0.1 to 3.0 mm. It is also preferable that the thickness of the coating layer is 2.0 mm or smaller. By using the copolymer, the coating layer of 0.5 mm or smaller, 0.4 mm or smaller, 0.3 mm or smaller, or 0.2 mm or smaller in thickness can be formed without any problem.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferably 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell through image processing, and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a melt state on the core wire to thereby form the coating layer.

In formation of a coating layer, by heating the copolymer and introducing a gas in the copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a melt state.

The copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed wiring boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, communication devices and the like. As the (2) formed articles, antenna covers are preferable in that the dielectric loss is low.

By forming the copolymer of the present disclosure by an injection molding method, a sheet excellent in the surface smoothness can be obtained in high productivity. The formed articles containing the copolymer of the present disclosure are excellent in the abrasion resistance at 150°C, the carbon dioxide low permeability, the chemical solution low permeability, the creep resistance, the rigidity on heating and the heat distortion resistance after chemical immersion. Therefore, the formed articles containing the copolymer of the present disclosure can suitably be utilized as films or sheets.

The films of the present disclosure are useful as release films. The release films can be produced by forming the copolymer of the present disclosure by melt extrusion forming, calendering, press molding, casting or the like. From the viewpoint that uniform thin films can be obtained, the release films can be produced by melt extrusion.

The films of the present disclosure can be applied to the surface of rolls used in OA devices. The copolymer of the present disclosure is formed into needed shapes by extrusion forming, compression molding, press molding or the like to be formed into sheet-shapes, filmy shapes or tubular shapes, and can be used as surface materials for OA device rolls, OA device belts or the like. Thin-wall tubes and films can be produced particularly by a melt extrusion forming method.

Due to that the formed articles containing the copolymer of the present disclosure are excellent in the abrasion resistance at 150°C, the carbon dioxide low permeability, the chemical solution low permeability, the creep resistance, the rigidity on heating and the heat distortion resistance after chemical immersion, the formed articles can suitably be utilized as bottles or tubes. The bottles or tubes of the present disclosure enable the content to be easily visually recognized and are hardly damaged during use.

By forming the copolymer of the present disclosure by an injection molding method, injection molded articles can be obtained in high productivity. Further, the molded articles to be obtained, due to being excellent in the surface smoothness, the abrasion resistance at 150°C, the carbon dioxide low permeability, the chemical solution low permeability, the creep resistance, the rigidity on heating and the heat distortion resistance after chemical immersion, can suitably be utilized for valves. Therefore, the valves containing the copolymer of the present disclosure can be produced in high productivity, are hardly damaged even when opening and closing are repeated in high frequency, and are excellent in the carbon dioxide low permeability and the chemical solution low permeability. At least liquid contact part of the valves of the present disclosure can be composed of the above copolymer. The valves of the present disclosure may be ones provided with a housing containing the above copolymer.

Although the embodiments have been described above, it will be understood that various changes in form and details are possible without departing from the gist and scope of the claims.

EXAMPLES

Next, embodiments of the present disclosure will be described with reference to examples, but the present disclosure is not intended to be limited by these examples.

The numerical values of the Examples were measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle of 2.1 mm in inner diameter and 8 mm in length at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was molded by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the sample was calculated according to the following formula (A).

$$N = I \times K/t \quad (A)$$

I: absorbance
K: correction factor
t: thickness of film (mm)

Regarding the functional groups in the present disclosure, for reference, the absorption frequency, the molar absorption coefficient and the correction factor are shown in Table 2. The molar absorption coefficients are those determined from FT-IR measurement data of low molecular model compounds.

[Table 2]

Table 2

| Functional Group | Absorption Frequency (cm⁻¹) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH₃ | 1795 | 680 | 342 | $C_7F_{15}COOCH_3$ |
| -CONH₂ | 3436 | 506 | 460 | $C_7H_{15}CONH_2$ |
| -CH₂OH₂, -OH | 3648 | 104 | 2236 | $C_7H_{15}CH_2OH$ |
| -CF₂H | 3020 | 8.8 | 26485 | $H(CF_2CF_2)_3CH_2OH$ |
| -CF=CF₂ | 1795 | 635 | 366 | $CF_2=CF_2$ |

(Melting point)

The polymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corp.); and the melting point was determined from a melting curve peak observed in the second temperature raising step.

Comparative Example 1

51.8 L of pure water was charged in a 174 L-volume autoclave; nitrogen replacement was sufficiently carried out; thereafter, 40.9 kg of perfluorocyclobutane and 2.75 kg of perfluoro(propyl vinyl ether) (PPVE) were charged; and the temperature in the system was held at 35°C and the stirring speed was held at 200 rpm. Then, tetrafluoroethylene (TFE) was introduced under pressure up to 0.64 MPa, and thereafter 0.103 kg of a 50% methanol solution of di-n-propyl peroxydicarbonate was charged to initiate polymerization. Since the pressure in the system decreased along with the progress of the polymerization, TFE was continuously supplied to make the pressure constant, and 0.058 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 43.3 kg of a powder.

The obtained powder was melt extruded at 360°C by a screw extruder (trade name: PCM46, manufactured by Ikegai Corp.) to thereby obtain pellets of a TFE/PPVE copolymer. By using the obtained pellets, the PPVE content was measured by the above-mentioned method.

The obtained pellets were put in a vacuum vibration-type reactor VVD-30 (manufactured by Okawara MFG. Co., Ltd.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and the $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above.

Comparative Example 2

51.8 L of pure water was charged in a 174 L-volume autoclave; nitrogen replacement was sufficiently carried out; thereafter, 40.9 kg of perfluorocyclobutane, 2.05 kg of perfluoro(propyl vinyl ether) (PPVE) and 2.12 kg of methanol were charged; and the temperature in the system was held at 35°C and the stirring speed was held at 200 rpm. Then, tetrafluoroethylene (TFE) was introduced under pressure up to 0.64 MPa, and thereafter 0.103 kg of a 50% methanol solution of di-n-propyl peroxydicarbonate was charged to initiate polymerization. Since the pressure in the system decreased along with the progress of the polymerization, TFE was continuously supplied to make the pressure constant, and 0.046 kg of PPVE was additionally charged for every 1 kg of TFE supplied. The polymerization was finished at the time when the amount of TFE additionally charged reached 40.9 kg. Unreacted TFE was released to return the pressure in the autoclave to the atmospheric pressure, and thereafter, an obtained reaction product was washed with water and dried to thereby obtain 42.8 kg of a powder.

The obtained powder was melt extruded at 360°C by a screw extruder (trade name: PCM46, manufactured by Ikegai Corp.) to thereby obtain pellets of a TFE/PPVE copolymer. By using the obtained pellets, the PPVE content was measured by the above-mentioned method.

The obtained pellets were put in the vacuum vibration-type reactor VVD-30 (manufactured by Okawara MFG. Co., Ltd.), and heated to 160°C. After vacuumizing, $F_2$ gas diluted to 20% by volume with $N_2$ gas was introduced to the atmospheric pressure. 0.5 hour after the $F_2$ gas introduction, vacuumizing was once carried out and the $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 160°C for 5 hours. After the reaction was finished, the reactor interior was replaced sufficiently by $N_2$ gas to finish the fluorination reaction. By using the fluorinated pellets, the above physical properties were measured by the methods described above.

Comparative Example 3

Fluorinated pellets were obtained as in Comparative Example 2, except for changing the charged amount of PPVE to 1.79 kg, changing the charged amount of methanol to 6.61 kg, changing the charged amount of the 50% methanol solution of di-n-propyl peroxydicarbonate to 0.051 kg, changing the additionally charged amount of PPVE for every 1 kg of TFE supplied to 0.042 kg, changing the raised temperature in the vacuum vibration-type reactor to 210°C, and changing the reaction to a temperature of 210°C for 10 hours to obtain 41.0 kg of dry powder.

Comparative Example 4

Fluorinated pellets were obtained as in Comparative Example 2, except for changing the charged amount of PPVE to 2.37 kg, changing the charged amount of methanol to 1.47 kg, changing the additionally charged amount of PPVE for every 1 kg of TFE supplied to 0.052 kg, changing the raised temperature of the vacuum vibration-type reactor to 210°C, and changing the reaction condition to at 210°C and for 10 hours, to thereby obtain 43.0 kg of dry powder.

Comparative Example 5

Non-fluorinated pellets were obtained as in Comparative Example 2, except for changing the charged amount of PPVE to 2.43 kg, changing the charged amount of methanol to 1.22 kg, and changing the additionally charged amount of PPVE for every 1 kg of TFE supplied to 0.053 kg, to thereby obtain 43.1 kg of dry powder.

Comparative Example 6

Fluorinated pellets were obtained as in Comparative Example 2, except for changing the charged amount of PPVE to 2.37 kg, changing the charged amount of methanol to 2.85 kg, changing the charged amount of the 50% methanol solution of di-n-propyl peroxydicarbonate to 0.051 kg, changing the additionally charged amount of PPVE for every 1 kg of TFE supplied to 0.052 kg, changing the raised temperature in the vacuum vibration-type reactor to 170°C, and changing the reaction to a temperature of 170°C for 5 hours to obtain 43.0 kg of dry powder.

Example 1

Fluorinated pellets were obtained as in Comparative Example 2, except for changing the charged amount of PPVE to 2.24 kg, changing the charged amount of methanol to 0.83 kg, changing the additionally charged amount of PPVE for every 1 kg of TFE supplied to 0.049 kg, changing the raised temperature of the vacuum vibration-type reactor to 180°C, and changing the reaction condition to at 180°C and for 10 hours, to thereby obtain 42.9 kg of dry powder.

Example 2

Fluorinated pellets were obtained as in Comparative Example 2, except for changing the charged amount of PPVE to 2.37 kg, changing the charged amount of methanol to 0.76 kg, changing the additionally charged amount of PPVE for every 1 kg of TFE supplied to 0.052 kg, changing the raised temperature of the vacuum vibration-type reactor to 210°C, and changing the reaction condition to at 210°C and for 10 hours, to thereby obtain 43.0 kg of dry powder.

Example 3

Fluorinated pellets were obtained as in Comparative Example 2, except for changing the charged amount of PPVE to 2.49 kg, changing the charged amount of methanol to 0.83 kg, changing the additionally charged amount of PPVE for every 1 kg of TFE supplied to 0.054 kg, changing the raised temperature of the vacuum vibration-type reactor to 210°C, and changing the reaction condition to at 210°C and for 10 hours, to thereby obtain 43.1 kg of dry powder.
By using the pellets obtained in Examples and Comparative Examples, the above physical properties were measured by the methods described above. The results are shown in Table 3.

[Table 3]

Table 3

|  | PPVE content (% by mass) | MFR (g/10 min) | Number of functional groups (number/C$10^6$) | Melting point (°C) |
|---|---|---|---|---|
| Comparative Example 1 | 5.5 | 26.0 | <6 | 302 |
| Comparative Example 2 | 4.4 | 29.0 | 42 | 304 |
| Comparative Example 3 | 4.0 | 25.0 | <6 | 305 |
| Comparative Example 4 | 4.9 | 30.4 | <6 | 302 |

(continued)

|  | PPVE content (% by mass) | MFR (g/10 min) | Number of functional groups (number/C10$^6$) | Melting point (°C) |
|---|---|---|---|---|
| Comparative Example 5 | 5.0 | 26.3 | 290 | 302 |
| Comparative Example 6 | 4.9 | 13.0 | 28 | 302 |
| Example 1 | 4.7 | 23.0 | 15 | 304 |
| Example 2 | 4.9 | 25.0 | <6 | 302 |
| Example 3 | 5.1 | 27.0 | <6 | 302 |

The description of "<6" in Table 3 means that the number of functional groups is less than 6.

Then, by using the obtained pellets, the following properties were evaluated. The results are shown in Table 4.

(Abrasion test)

By using the pellets and a heat press molding machine, a sheet-shape test piece of approximately 0.2 mm in thickness was prepared, and this was cut out into a test piece of 10 cm × 10 cm. The prepared test piece was fixed on a test bench of a Taber abrasion tester (No. 101 Taber type abrasion tester with an option, manufactured by YASUDA SEIKI SEISAKUSHO, LTD.) and the abrasion test was carried out at a test piece surface temperature of 150°C and a load of 500 g, using an abrasion wheel CS-10 (rotationally polished in 20 rotations with an abrasive paper #240) and at a rotation rate of 60 rpm by using the Taber abrasion tester. The weight of the test piece after 1,000 rotations was measured, and the same test piece was further subjected to the test of 5,000 rotations and thereafter, the weight thereof was measured. The abrasion loss was determined by the following formula.

$$\text{Abrasion loss (mg)} = M1 - M2$$

M1: the weight of the test piece after the 1,000 rotations (mg)
M2: the weight of the test piece after the 5,000 rotations (mg)

(Carbon dioxide permeation coefficient)

By using the pellets and a heat press molding machine, a sheet-shape test piece of approximately 0.1 mm in thickness was prepared. Using the obtained test piece, the measurement of the carbon dioxide permeability was carried out according to a method described in JIS K7126-1:2006 by using a differential gas permeability tester (L100-5000 gas permeability tester, manufactured by Systech illinois). The numerical values of the carbon dioxide permeability were obtained with a permeation area of 50.24 cm$^2$, at a test temperature of 70°C, and at a test humidity of 0% RH. The carbon dioxide permeation coefficient was calculated by using the obtained carbon dioxide permeability and the test piece thickness by the following formula.

$$\text{Carbon dioxide permeation coefficient}$$
$$(\text{cm}^3 \cdot \text{mm}/(\text{m}^2 \cdot 24\text{h} \cdot \text{atm})) = GTR \times d$$

GTR: carbon dioxide permeability (cm$^3$/(m$^2$·24h·atm))
d: test piece thickness (mm)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the DMC, and held at a temperature of 60°C for 30 days, and thereafter, the test cup was taken out and allowed to stand at room temperature for 1 hour;

thereafter, the amount of the mass lost was measured. The DMC permeability ($g \cdot cm/m^2$) was determined by the following formula.

$$\text{Electrolytic solution permeability } (g \cdot cm/m^2) = \text{the amount of the mass lost } (g) \times \text{ the thickness of the sheet-shape test piece } (cm) \text{ / the permeation area } (m^2)$$

(Evaluation of creep resistance)

The measurement of the creep resistance was carried out according to a method described in ASTM D395 or JIS K6262:2013. A molded article of 13 mm in outer diameter and 8 mm in height was prepared by using the pellets and a heat press molding machine. The obtained molded article was cut to prepare a test piece of 13 mm in outer diameter and 6 mm in height. The prepared test piece was compressed by using a compression device at ambient temperature to a compression deformation rate of 25%. The compressed test piece fixed on the compression device was allowed to stand still in an electric furnace at 80°C for 72 hours. The compression device was taken out from the electric furnace, and cooled to room temperature; thereafter, the test piece was dismounted. The collected test piece was allowed to stand at room temperature for 30 min, and the height of the collected test piece was measured and the proportion of recovery was determined by the following formula.

$$\text{Proportion of recovery } (\%) = (t_2 - t_1)/t_3 \times 100$$

$t_1$: the height of a spacer (mm)
$t_2$: the height of the test piece dismounted from the compression device (mm)
$t_3$: the height (mm) after being compressively deformed

In the above test, $t_1$ was 4.5 mm and $t_3$ was 1.5 mm.

(Load deflection rate at 80°C)

By using the pellets and a heat press molding machine, a sheet-shape test piece of approximately 2 mm in thickness was prepared, this was cut out into a test piece of 80 × 10 mm, which was heated in an electric furnace at 100°C for 20 hours. Except for using the obtained test piece, the test was carried out according to a method described in JIS K-K 7191-1 using a heat distortion tester (manufactured by YASUDA SEIKI SEISAKUSHO, LTD.) under the conditions of at a test temperature of 30 to 150°C, a temperature-increasing rate of 120°C/hour, a bending stress of 1.8 MPa and a flatwise method. The load deflection rate was determined by the following formula. A sheet having a low load deflection rate at 80°C is excellent in the rigidity on heating.

$$\text{Load deflection rate } (\%) = a2/a1 \times 100$$

a1: the test piece thickness before test (mm)
a2: the amount of deflection at 80°C (mm)

(Chemical immersion crack test (heat distortion resistance after chemical immersion))

A sheet of approximately 2 mm in thickness was prepared by using the pellets and a heat press molding machine. The obtained sheet was punched out by using a rectangular dumbbell of 13.5 mm × 38 mm to obtain 3 test pieces. A notch was formed on the middle of a long side of the each obtained test piece according to ASTM D1693 by a blade of 19 mm × 0.45 mm. The three notched test pieces and 25 g of dimethylsulfoxide were put in a 100 mL portable reactor (TVS1, manufactured by Taiatsu Glass Kogyo) and heated in an electric furnace at 150°C for 20 hours, and thereafter, notched test pieces were taken out. Then, the three notched test pieces were mounted on a stress crack test jig according to ASTM D1693, and heated in an electric furnace at 150°C for 24 hours; thereafter, the notches and their vicinities were visually observed and the number of cracks was counted. A sheet having no crack generated is excellent in the heat distortion resistance even after immersion in a chemical solution.

Good: the number of cracks was 0
Poor: the number of cracks was 1 or more

(Injection moldability)

The copolymer was injection molded by using an injection molding machine (SE50EV-A, manufactured by Sumitomo Heavy Industries, Ltd.) set at a cylinder temperature of 390°C, a mold temperature of 170°C and an injection speed of 50 mm/s. The mold used was a mold (100 mm × 100 mm × 2.5 mmt) Cr plated on HPM38. The surface of the injection molded article was visually observed and the surface smoothness was evaluated according to the following criteria.

2: Roughness was not observed on the surface and flat
1: Roughness was observed only on the surface of the portion positioned in the vicinity of the gate of the mold
0: Roughness was observed on the most portion of the surface

(Coating breakage and sparks)

Extrusion coating of the copolymer in the following coating thickness was carried out on a copper conductor of 0.50 mm in conductor diameter by a 30-mmφ electric wire coating forming machine (manufactured by Tanabe Plastics Machinery Co., Ltd.), to thereby obtain a coated electric wire. The extrusion conditions for the electric wire coating were as follows.

a) Core conductor: 0.50 mm in conductor diameter
b) Coating thickness: 0.15 mm
c) Coated electric wire diameter: 0.80 mm
d) Electric wire take-over speed: 150 m/min
e) Extrusion condition:

· Cylinder screw diameter = 30 mm, a single screw extruder of L/D = 22
· Die (inner diameter)/tip (outer diameter) = 8.0 mm/5.0 mm

Set temperature of the extruder: barrel section C-1 (330°C), barrel section C-2 (360°C), barrel section C-3 (375°C), head section H (390°C), die section D-1 (405°C), die section D-2 (395°C). Set temperature for preheating core wire: 80°C.

(Coating breakage)

Electric wire coating forming was continuously carried out; and the case where coating breakage occurred once or more in 1 hour was determined as poor (Poor) in continuous forming, and the case where no coating breakage occurred was determined as fair (Good) in continuous forming.

(Spark)

A spark tester (DENSOK HIGH FREQ SPARK TESTER) was installed online on an electric wire coating line, and the presence/absence of defects of electric wire coating was evaluated at a voltage of 1,500 V. The case where no spark was generated in 1-hour continuous forming was determined as passing (Good), and the case where a spark was detected therein was determined as rejected (Poor).

(Dielectric loss tangent)

By melt forming the pellets, a cylindrical test piece of 2 mm in diameter was prepared. The prepared test piece was set in a cavity resonator for 6 GHz, manufactured by KANTO Electronic Application and Development Inc., and the dielectric loss tangent was measured by a network analyzer, manufactured by Agilent Technologies Inc. By analyzing the measurement result by analysis software "CPMA", manufactured by KANTO Electronic Application and Development Inc., on PC connected to the network analyzer, the dielectric loss tangent (tanδ) at 20°C at 6 GHz was determined.

[Table 4]

Table 4

| | Abrasion loss at 150°C (mg) | $CO_2$ permeation coefficient $cm^3 \cdot mm / (m^2 \cdot 24h \cdot atm)$ | Electrolytic solution permeability $(g \cdot cm/m^2)$ | Evaluation of creep resistance Proportion of recovery (%) | Load deflection rate at 80°C (%) | Chemical agent immersion crack test | Injection moldability | Electric wire coating test | | Dielectric loss tangent |
|---|---|---|---|---|---|---|---|---|---|---|
| | | | | | | | | Coating breakage | Spark | |
| Comparative Example 1 | 28 | 1551 | 6.58 | 19% | 78% | Good | 2 | Good | Good | 0.00038 |
| Comparative Example 2 | 31.7 | 1381 | 6.20 | 25% | 64% | Poor | 2 | Good | Good | 0.00045 |
| Comparative Example 3 | 31.7 | 1322 | 6.22 | 28% | 59% | Poor | 1 | Good | Good | 0.00034 |
| Comparative Example 4 | 30.7 | 1425 | 6.28 | 22% | 70% | Poor | 2 | Good | Good | 0.00036 |
| Comparative Example 5 | 29.4 | 1666 | 7.53 | 18% | 71% | Good | 2 | Good | Poor | 0.00104 |
| Comparative Example 6 | 24.9 | 1608 | 7.14 | 24% | 70% | Good | 0 | Poor | Poor | 0.00044 |
| Example 1 | 29.3 | 1446 | 6.46 | 24% | 68% | Good | 1 | Good | Good | 0.0004.2 |
| Example 2 | 29.3 | 1461 | 6.44 | 23% | 70% | Good | 1 | Good | Good | 0.00036 |
| Example 3 | 29.3 | 1479 | 6.48 | 22% | 73% | Good | 2 | Good | Good | 0.00037 |

EP 4 299 614 A1

**Claims**

1. A copolymer, comprising tetrafluoroethylene unit and perfluoro(propyl vinyl ether) unit,

   wherein the copolymer has a content of perfluoro(propyl vinyl ether) unit of 4.6 to 5.2% by mass with respect to the whole of the monomer units,
   a melt flow rate at 372°C of 22.0 to 28.0 g/10 min, and
   the number of functional groups of 50 or less per $10^6$ main-chain carbon atoms.

2. An injection molded article, comprising the copolymer according to claim 1.

3. A coated electric wire, comprising a coating layer comprising the copolymer according to claim 1.

4. A formed article, comprising the copolymer according to claim 1, wherein the formed article is a microtube, a container, a piping member, or an electric wire coating.

## INTERNATIONAL SEARCH REPORT

| International application No. |
|---|
| **PCT/JP2022/003665** |

### A. CLASSIFICATION OF SUBJECT MATTER

***C08F 8/00***(2006.01)i; ***B29C 45/00***(2006.01)i; ***C08F 214/26***(2006.01)i; ***H01B 3/44***(2006.01)i; ***H01B 7/02***(2006.01)i; ***H01B 7/18***(2006.01)i

FI:   C08F8/00; H01B7/02 Z; H01B3/44 C; H01B7/18 H; C08F214/26; B29C45/00

According to International Patent Classification (IPC) or to both national classification and IPC

### B. FIELDS SEARCHED

Minimum documentation searched (classification system followed by classification symbols)

C08F8/00; B29C45/00; C08F214/26; H01B3/44; H01B7/02; H01B7/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | CN 110790854 A (ZHEJIANG YONGHE FLUOROCHEMICAL CO., LTD.) 14 February 2020 (2020-02-14) claims, paragraphs [0003], [0049]-[0055], [0065]-[0066], [0079]-[0079], [0082]-[0095], [0131]-[0134] | 1-4 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/003665**

| Patent document cited in search report | | | Publication date (day/month/year) | Patent family member(s) | Publication date (day/month/year) |
|---|---|---|---|---|---|
| CN | 110790854 | A | 14 February 2020 | (Family: none) | |

Form PCT/ISA/210 (patent family annex) (January 2015)

**EP 4 299 614 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005320497 A